# EUROPEAN PATENT SPECIFICATION

(11) **EP 2 309 143 B1**
(45) Date of publication and mention of the grant of the patent: **06.04.2016**
(21) Application number: 09773284.6
(22) Date of filing: 12.06.2009
(51) Int. Cl.: F16C 33/34, F16C 19/22

(54) **BEARING ROLLER, BEARING, AND BEARING ROLLER PROCESSING METHOD**
LAGERROLLE, LAGER UND LAGERROLLENBEARBEITUNGSVERFAHREN
ROULEAU DE ROULEMENT, ROULEMENT, ET PROCÉDÉ DE TRAITEMENT D'UN ROULEAU DE ROULEMENT

(30) Priority: 01.07.2008 JP 2008172604
(43) Date of publication of application: 13.04.2011
(73) Proprietor: NTN Corporation, Osaka-shi, Osaka 550-0003 (JP)
(72) Inventor: HIRANO Hidekazu, Iwata-shi Shizuoka 438-8510 (JP)
(74) Representative: Eder, Thomas
(86) International application number: PCT/JP2009/060737
(87) International publication number: WO 2010/001706

(56) References cited:
- EP-A2- 1 538 356
- JP-A- 4 159 001
- JP-A- 5 345 264
- JP-A- 8 074 858
- JP-A- 2003 071 685
- JP-A- 2006 009 891
- US-A- 5 752 775
- US-A1- 2002 159 664

## Description

### Technical Field

The present invention relates to a bearing roller, a bearing, and a processing method for a bearing roller.

### Background Art

Examples of a bearing include a cylindrical-roller bearing using cylindrical rollers, a tapered-roller bearing using tapered rollers, and a self-aligning spherical roller bearing using self-aligning spherical rollers. In the cylindrical-roller bearing, an inner race and the rollers are held in linear contact with each other, and an outer race and the rollers are held in linear contact with each other. The cylindrical-roller bearing is excellent in radial load capacity, and hence is suitable to heavy loading use. In the tapered-roller bearing, a raceway of an inner race, a raceway of an outer race, and rollers are formed in a tapered conical shape. The tapered-roller bearing is designed so that tops of cones of the raceway of the inner race, the raceway of the outer race, and each of the rollers concentrate on one point on an axis. In the self-aligning spherical roller bearing, a raceway of an outer race is designed to form a spherical surface defined about a center corresponding to a center of the bearing, and rollers are formed in a barrel-like shape and attached to an inner race together with a retainer.

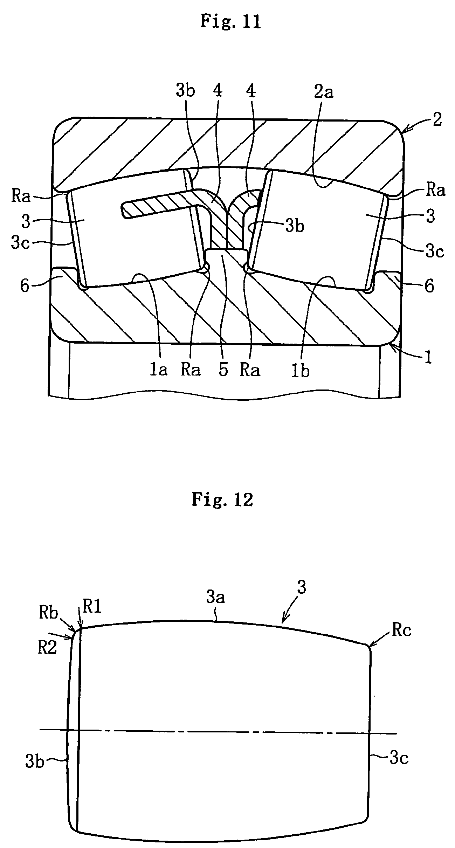

Fig. 11 illustrates a self-aligning spherical roller bearing. The bearing includes an inner race 1 provided with double-row raceway surfaces 1 a and 1 b formed in an outer diameter surface, an outer race 2 provided with a raceway surface 2a formed in an inner diameter surface and facing the raceway surfaces 1 a and 1 b of the inner race 1, double-row rollers 3 arranged between the raceway surfaces 1 a and 1 b of the inner race 1 and the raceway surface 2a of the outer race 2, and retainers 4 for retaining those double-row rollers 3. Further, the inner race 1 includes a middle flange portion 5 provided between the raceway surfaces 1 a and 1 b thereof, and outer flange portions 6 and 6 provided at axial end portions. Thus, each of the rollers 3 is interposed between the middle flange portion 5 and one of the outer flange portions 6.

In this case, each of the rollers 3 has an outer diameter surface 3a formed as a spherical surface having a curvature corresponding to that of the raceway surface of the outer race 2, a large end surface 3b formed as a spherical surface having a curvature larger than that of the outer diameter surface 3a, and a small end surface 3c formed as a flat surface.

Further, round portions Ra and Ra are formed on a boundary between the outer diameter surface 3a and the large end surface 3b, and a boundary between the outer diameter surface 3a and the small end surface 3c, respectively. In many cases, corner rounds which are formed at the time of material processing and which are left as they are are generally used as the round portions Ra and Ra. Further, the outer diameter surface 3a, the end surfaces 3b and 3c, the round portions Ra and Ra are processed at respective rotational centers.

Examples of the rollers 3 include one illustrated in Fig. 12. The roller 3 includes a chamfered round portions Rb and Rc formed on the boundary between the outer diameter surface 3a and the large end surface 3b, and the boundary between the outer diameter surface 3a and the small end surface 3c, respectively. The outer diameter surface 3a and the chamfered round portion Rb are smoothly continuous with each other through intermediation of a first round portion R1, and the large end surface 3b and the chamfered round portion Rb are smoothly continuous with each other through intermediation of a second round portion R2.

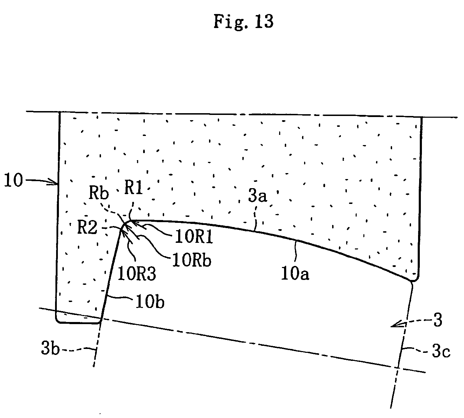

As described in Patent Literature 1, a grinding stone 10 as illustrated in Fig. 13 is used in some cases for the roller 3 illustrated in Fig. 12. The grinding stone 10 includes an outer diameter grinding portion 10a for grinding the outer diameter surface 3a of the roller 3, a large-end-surface grinding portion 10b for grinding the large end surface 3b, a chamfer grinding portion 10Rb for grinding the chamfered round portion Rb, a first round grinding portion 10R1, and a second round grinding portion 10R2. The first round grinding portion 10R1 has a curvature radius corresponding to that of the first round R1 of the roller 3 and makes the outer diameter grinding portion 10a and the chamfer grinding portion 10Rb smoothly continuous with each other. The second round grinding portion 10R2 has a curvature radius corresponding to that of the second round R2 of the roller 3 and makes the large-end-surface grinding portion 10b and the chamfer grinding portion 10Rb smoothly continuous with each other. In this case, the outer diameter surface 3a, the large end surface 3b, and the chamfered round portion Rb of the roller 3 are grinded simultaneously with one another.
From US 2002/159664 A1, a ball roller is known with rounded portions , continuing smoothly from opposing end surface sides to the outer diameter surface side. The curvature areas are each designed with a specific radius and both opposing end surfaces are curved.
US 5 752 775 A discloses a combination of radii to form a continuous shape from the end surfaces on to the outer diameter surface side of a rolling element for a roller bearing. However, no relation between the curvature radii of the outer-diameter-surface-side corner portion and the end-surface-side corner portion is given.

### Citation List

Patent Literature 1: JP 3539770 B2

### Summary of Invention

### Technical Problems

When the corner rounds formed at the time of material processing are left and used as the round portions, the round portions are less liable to form continuous tangential rounds. Further, in the case where the outer diameter surface 3a, the end surfaces 3b and 3c, and the chamfered round portions Rb and Rc are processed at respective rotational centers, relations between processed surfaces are unstable even when respective surfaces-to-be-processed can be processed with high accuracy. That is, corners of a finished product do not correspond to a circle concentric with a circle defined about a rotational center of the roller. Thus, there is a risk that a product (roller) with high accuracy cannot be provided.

Further, in the self-aligning spherical roller bearing described in Patent Literature 1, a slitting direction is limited to one direction, and hence the round portions Rb and Rc cannot be processed at once (simultaneously). Thus, there is a risk that one of the first round portion Rb and the second round portion Rc is not smoothly continuous with the outer diameter surface 3a.

In addition, the grinding stone 10 illustrated in Fig. 13 is influenced by material sizes. Thus, there is a risk that variation in entire length dimension occurs when outer diameters are uniform, and variation in outer diameters occurs when the entire length dimensions are uniform.

In order to solve the above-mentioned problems, the present invention has been made to provide a bearing roller which can be formed with high accuracy and is capable of achieving a prolonged life, a processing method for the bearing roller, and a bearing which is capable of reducing rotational torque and enhancing rotational accuracy.

### Solution to Problems

A bearing roller according to the present invention, includes center holes respectively formed in both end surfaces, in which, under a state of being supported through intermediation of the center holes, the bearing roller is processed so that an outer diameter surface and round portions between both the end surfaces and the outer diameter surface are smoothly continuous with each other.

Edge load may be generated in bearings. Herein, the edge load means occurrence of early peeling-off starting from an end portion at which surface pressure locally increases owing to rollers having inappropriate shapes upon contact of a bearing race and rollers. Thus, unless the outer diameter surface and the corner portions between the end surfaces and the outer diameter surface are smoothly continuous with each other, there is a risk of generation of the edge load. However, the bearing roller according to the present invention is processed so that the outer diameter surface and the round portions at the corners between the end surfaces and the outer diameter surface are smoothly continuous with each other. Thus, when the roller is incorporated in the bearing, the edge load can be suppressed and rotational torque can be reduced.

In addition, the surfaces-to-be-processed are processed under a state in which the bearing roller is supported through intermediation of center holes, and hence parts separately processed in all processing steps are concentric with each other.

The present invention may be applied to a cylindrical roller, a tapered roller, or a self-aligning spherical roller.

In a bearing according to the present invention, the above-mentioned bearing roller is used.

A processing method for a bearing roller according to the present invention, includes: an end-surface grinding step of grinding both end surfaces and end-surface-side round portions at round portions, under a state in which a bearing roller is rotated about an axis of the bearing roller while being supported through intermediation of center holes in both the end surfaces and held through intermediation of the outer diameter surface; and an outer-diameter-surface grinding step of grinding the outer diameter surface and outer-diameter-surface-side corner portions at the round portions, under a state in which the bearing roller is rotated about the axis of the bearing roller by a driving force transmitted from at least one of both the end surfaces while being supported through intermediation of the center holes in both the end surfaces.

According to the processing method for a bearing roller of the present invention, under the state in which the bearing roller is supported through intermediation of the center holes, the end surfaces and the end-surface-side round portions at the round portions can be grinded, and under the state in which the bearing roller is supported through intermediation of the center holes, the outer diameter surface and the outer-diameter-surface-side corner portions at the round portions can be grinded. Thus, processing can be performed with high quality.

It is preferred to perform the end-surface grinding step and the outer-diameter-surface grinding step after crude-processing of a surface of the bearing roller through quenched-steel trimming. Herein, the quenched-steel trimming means trimming after heat treatment (quenching). Thus, compressive stress generated at the time of the quenched-steel trimming is left on the surface of the roller.

### Advantageous Effects of Invention

A bearing incorporating the bearing roller according to the present invention is capable of suppressing edge load, and hence load on an inner race and an outer race is reduced, with the result that a life of the bearing can be prolonged. Further, the rotational torque can be reduced, and hence high-accuracy rotation can be achieved. In the processing of the roller, the roller is processed while being supported through intermediation of the center holes in all of the processing steps, and hence separately processed parts are concentric with each other. Thus, processing can be performed so that the outer diameter surface and the corner portions between the end surfaces and the outer diameter surface are smoothly continuous with each other. Further, the end surfaces and the outer diameter surface can be processed separately from each other. Thus, dimensional accuracy is enhanced, and rotational accuracy of the bearing using the roller processed as described above is also enhanced.

Through the quenched-steel trimming, the compressive stress generated at the time of quenched-steel trimming is left on the surface of the roller, and hence the life of the bearing can be further prolonged.

### Brief Description of Drawings

[Fig. 1] A side view of a roller according to an embodiment of the present invention.
[Fig. 2] An enlarged view of a corner portion between a large end surface and an outer diameter surface of the roller illustrated in Fig. 1.
[Fig. 3] An enlarged view of another corner portion between a small end surface and the outer diameter surface of the roller illustrated in Fig. 1.
[Fig. 4] A schematic block diagram of a processing method for a bearing roller according the embodiment of the present invention.
[Fig. 5] A schematic view illustrating a quenched-steel trimming step.
[Fig. 6] A schematic view illustrating an end-surface grinding step.
[Fig. 7] A main-portion enlarged view of a grinding stone illustrated in Fig. 6.
[Fig. 8] A schematic view of an outer-diameter-surface grinding step.
[Fig. 9] A main-portion enlarged view of a grinding stone illustrated in Fig. 8.
[Fig. 10] A graph showing residual stress.
[Fig. 11] A main-portion sectional view of a conventional bearing.
[Fig. 12] An enlarged view of a roller of the conventional bearing.
[Fig. 13] A main-portion sectional view of a conventional grinding stone used for bearing-roller processing.

### Description of Embodiments

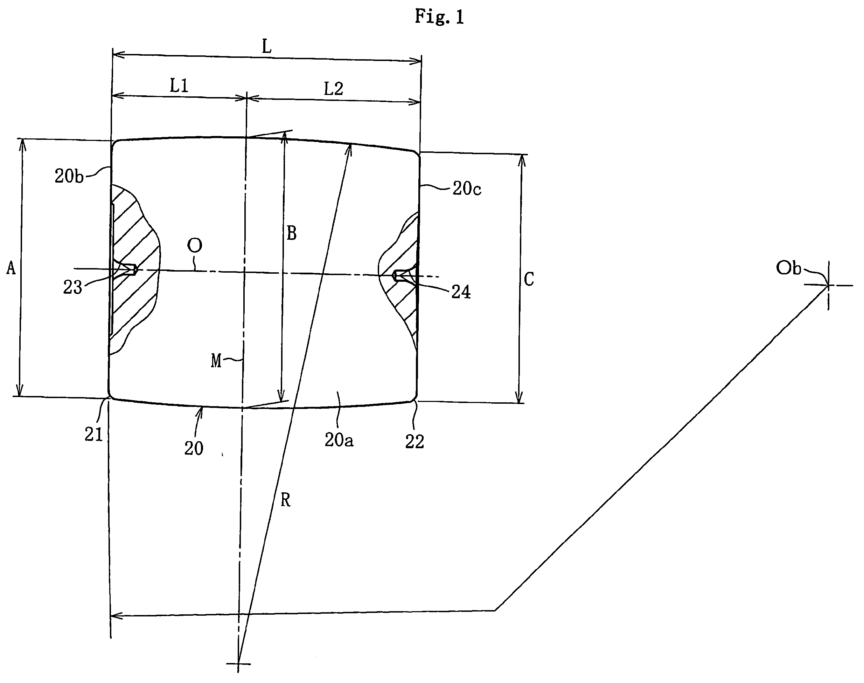

In the following, description is made of an embodiment of the present invention with reference to Figs. 1 to 10.

Figs. 1 to 3 illustrate a bearing roller according to the present invention, and the bearing roller 20 is a self-aligning spherical roller bearing. The self-aligning spherical roller bearing is classified by a roller shape as an asymmetrical roller bearing and a symmetrical roller bearing. The asymmetrical roller bearing has an asymmetrical roller in which a position of a maximum diameter is shifted from a longitudinal center. The symmetrical roller bearing has a symmetrical roller in which the maximum diameter is positioned on the longitudinal center.

The bearing roller 20 is the asymmetrical roller, and a maximum-outer-diameter portion M of an outer diameter surface 20a is shifted from an axial center line. Further, a large end surface 20b is formed as a spherical surface having a curvature larger than that of the outer diameter surface 20a, and a small end surface 20c is formed as a flat surface. In other words, B>A>C is established where A represents an outer diameter dimension of the large end surface 20b, B an outer diameter dimension of the maximum-outer-diameter portion M, and C an outer diameter dimension of the small end surface 20c. L1+L2=L and L1<L2 are established where L represents an axial length of the roller, L1 an axial length from the maximum-outer-diameter portion M to the large end surface 20b, and L2 an axial length from the maximum-outer-diameter portion M to the small end surface 20c. Note that, in Fig. 1, Ob represents a center curvature of the large end surface 20b.

A round portion 21 is formed at a corner between the outer diameter surface 20a and the large end surface 20b. A round portion 22 is formed at a corner between the outer diameter surface 20a and the small end surface 20c.

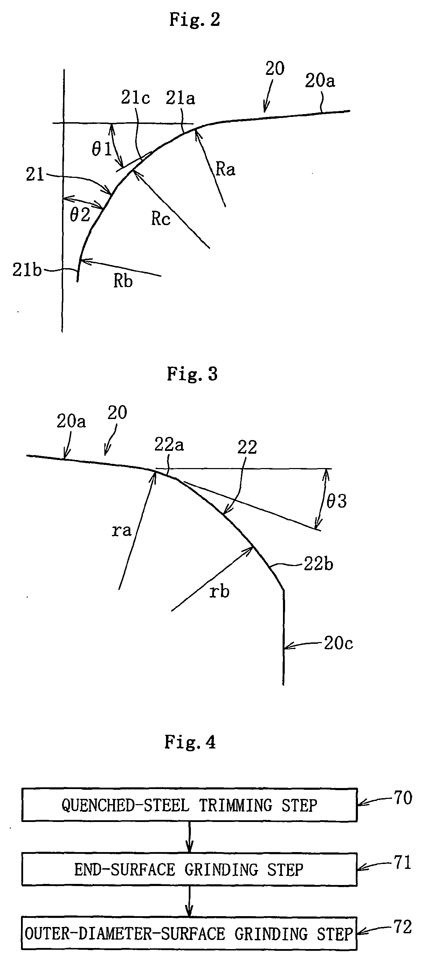

As illustrated in Fig. 2, the round portion 21 is constituted by an outer-diameter-surface-side corner portion 21 a on an outer-diameter-surface-20a side, a large-end-surface-side corner portion 21 b on a large-end-surface-20b side, an intermediate round portion 21 c between the outer-diameter-surface-side corner portion 21 a and the large-end-surface-side corner portion 21 b. In this case, Rc>Ra=Rb is established where Ra represents a curvature radius of the outer-diameter-surface-side corner portion 21 a, Rb represents a curvature radius of the large-end-surface-side corner portion 21b, and Rc represents a curvature radius of the intermediate round portion 21 c.

As illustrated in Fig. 3, the round portion 22 is constituted by an outer-diameter-surface-side corner portion 22a on an outer-diameter-surface-20a side and a small-end-surface-side corner portion 22b on a small-end-surface-20c side. In this case, rb>ra is established where ra represents a curvature radius of the outer-diameter-surface-side corner portion 22a, and rb represents a curvature radius of the small-end-surface-side corner portion 22b.

The roller is processed so that the outer diameter surface 20a and the round portion 21 between the large end surface 20b and the outer diameter surface 20a are smoothly continuous with each other and that the outer diameter surface 20a and the round portion 22 between the small end surface 20c and the outer diameter surface 20a are smoothly continuous with each other. Further, as illustrated in Fig. 1, the large end surface 20b and the small end surface 20c are provided with center holes 23 and 24 arranged on a roller axis, respectively.

Next, description is made of a processing method for a bearing roller according to the present invention. A roller used in this case is a tapered roller. On the large-end-surface-20b side, the corner portion 21 is formed, which is constituted by the outer-diameter-surface-side corner portion 21 a, the intermediate round portion 21 c, and the large-end-surface-side corner portion 21 b. On a small-end-surface-20c side, the corner portion 22 is formed, which is constituted by the outer-diameter-surface-side corner portion 22a and the small-end-surface-side corner portion 22b.

As illustrated in Fig. 4, the processing method includes a quenched-steel trimming step 70 of crude-processing the surfaces, an end-surface grinding step 71 of grinding the end-surface-side corner portions 21 b and 22b in the end surfaces 20b and 20c and the round portions 21 and 22, and an outer-diameter-surface grinding step 72 of grinding the outer-diameter-surface-side corner portions 21 a and 22a in the outer diameter surface 20a and the round portions 21 and 22.

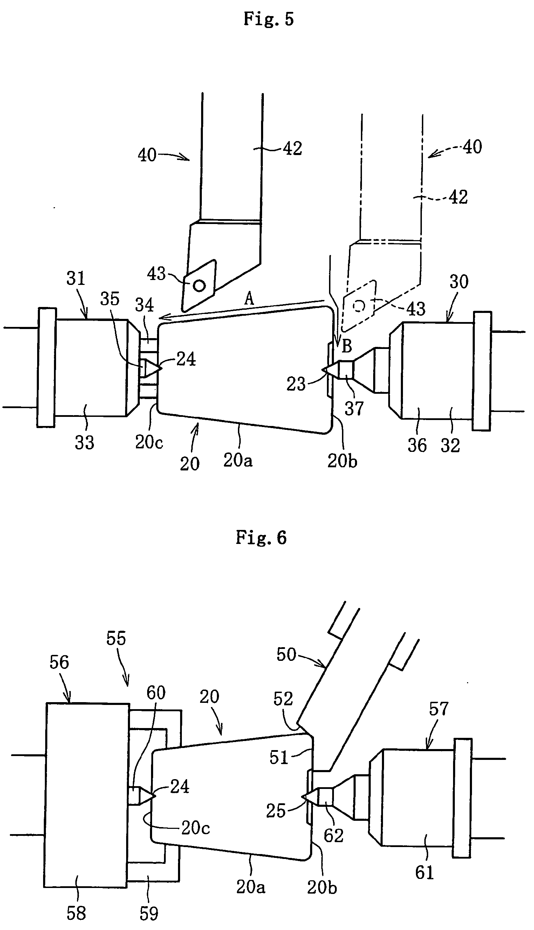

As illustrated in Fig. 5, in the quenched-steel trimming step 70, a chucking device 30 for supporting the roller 20 through intermediation of center holes 23 and 24 thereof. The chucking device 30 includes a drive-side member 31 and a driven-side member 32. The drive-side member 31 includes a rotator 33, a transmitter 34 for transmitting a rotational force of the rotator 33 to the small end surface 20c of the roller 20, and a center 35 having a distal end thereof fitting into the center hole 24 of the small end surface 20c. Further, the driven-side member 32 includes a rotator 36 freely rotated about an axis thereof, and a center 37 having a distal end thereof fitting into the center hole 23 of the large end surface 20b.

Thus, by means of the center 35 of the drive-side member 31 and the center 37 of the driven-side member 32, the roller 20 is supported under a state of being arranged on the axis O thereof. Under the state, rotational driving of the rotator 33 on a drive-side-member-31 side causes the rotational force of the rotator 33 to be transmitted to the small end surface 20c of the roller 20 through intermediation of the transmitter 34, and the roller 20 to be rotated about the axis O thereof.

In this case, the roller 20 is trimmed by a trimming tool 40. The trimming tool 40 includes a trimming tool body 42 and a bit 43 attached to the trimming tool body 42. The trimming tool 40 is capable of trimming the outer diameter surface 20a by moving along the outer diameter surface 20a in an arrow direction A, and trimming the end surface 20b along the end surface 20b in an arrow direction B. Note that, in this embodiment, although being trimmed with the single trimming tool 40, the outer diameter surface 20a and the end surface 20b may be trimmed with a trimming tool for the outer diameter surface and a trimming tool for the end surface, respectively.

The trimming in this case is quenched-steel trimming. Thus, a roller material is provided with a hardened layer formed by heat treatment on the surface. Steel materials (bearing steel, medium carbon steel, and the like) conventionally used for the rollers of this type are used as the roller material. Herein, the quenched-steel trimming means simple trimming. This is because the simple trimming is normally performed on a raw material, and hence, in order to clarify that trimming in this case is performed after heat treatment (quenching), a term quenched-steel trimming is used. Grinding is performed after quenching, and hence heat treatment deformation of the material can be eliminated in the grinding step. As a result of quenching, tensile residual stress is liable to be left, which decreases fatigue strength. Thus, grinding of the surface causes an outermost surface portion to be imparted with compressive residual stress, which increases fatigue strength.

Various hardening treatments (heat treatment) such as high-frequency quenching (not frequently used as heat treatment of rollers), (combination of immersion quenching and annealing), and carburizing and quenching are performed in accordance with materials to be used. The quenching with use of high-frequency heating is a quenching method in which a part required for quenching is surrounded by a coil carrying a high-frequency current and which adopts a principle of generating Joule heat by electromagnetic induction so as to heat a conductive body. The carburizing and quenching is a method of performing quenching and annealing with respect to steel carburized through treatment of impregnating carbon (carburizing treatment) from a surface layer, the treatment being performed through heating of steel for a long period of time in a gas, liquid, or solid carburizing agent containing much activated carbon.

Note that, illustration of trimming on a small-end-surface-20c side is omitted. Similarly to the large end surface 20b, the small end surface 20c can be trimmed by a trimming tool 41 as long as the roller 20 is supported on the large-end-surface-20b side by the drive-side member 31.

In the quenched-steel trimming step 70 including the above-mentioned processes, on the large-end-surface-20b side, there is formed a round portion having a curvature radius equal to the curvature radius Rc of the intermediate round portion 21 c of the round portion 21. On the small end surface 20c, there is formed a round portion having a curvature radius equal to the curvature radius Rb of the small-end-surface-side corner portion 22b of the round portion 22.

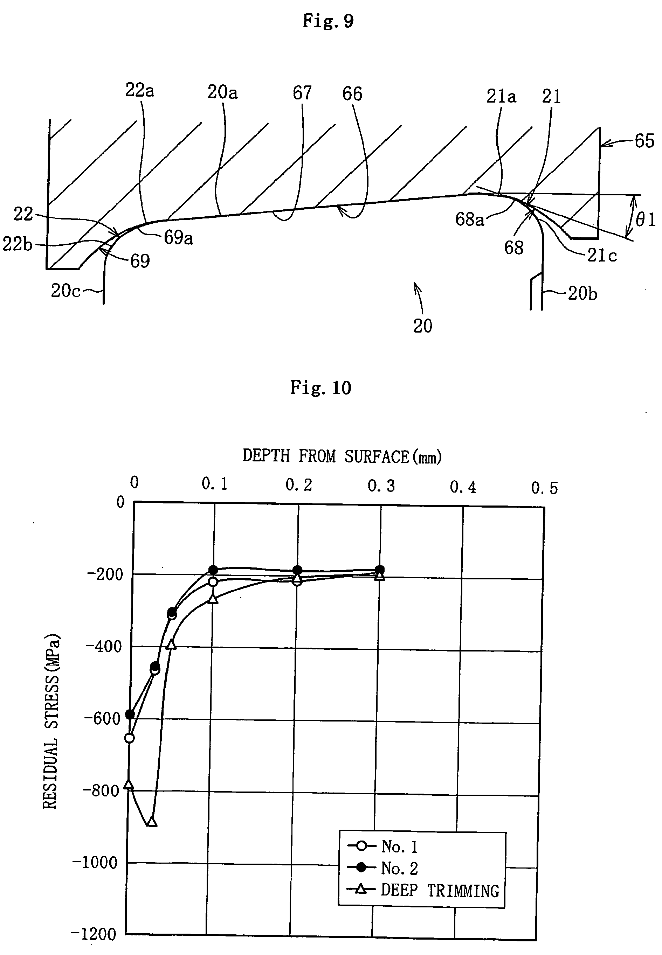

Fig. 10 shows a relation between a depth from the surface and residual stress. In Fig. 10, circles of No. 1 and solid circles of No. 2 indicate trimming with small trimming allowance, and triangles indicate deep trimming with much trimming allowance. The graph shows that quenched-steel trimming generates compressive stress on the surface.

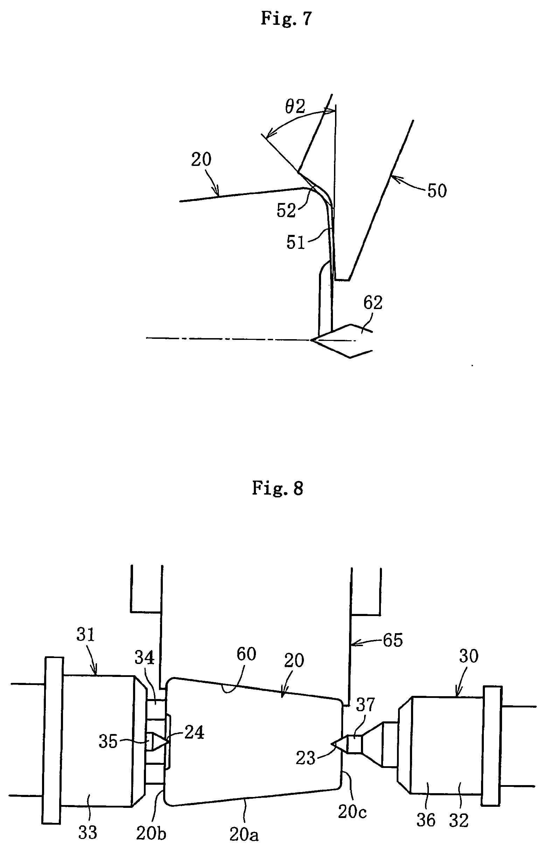

Next, the end-surface grinding step 71 is performed so that the end surfaces 20b and 20c are grinded. In this case, as illustrated in Fig. 6, plunge cut is performed with a grinding stone 50 formed by dressing. Plunge cut means performing grinding with a grinding stone sent in a radial direction. As illustrated in Fig. 7, the grinding stone 50 includes an end-surface grinding portion 51 and a corner-portion grinding portion 52. In this case, the end-surface grinding portion 51 is arranged on a vertical plane, and the corner-portion grinding portion 52 is inclined with respect to the end-surface grinding portion 51 at a predetermined angle θ2 (for example, approximately 30 degrees).

Further, in a case of using the grinding stone 50, there is used a chucking device 55 as illustrated in Fig. 6. The chucking device 55 includes a drive-side member 56 and a driven-side member 57. The drive-side member 56 includes a rotator 58, a transmitter 59 for transmitting a rotational force of the rotator 58 to the outer diameter surface 20a of the roller 20, and a center 60 having a distal end thereof fitting into the center hole 24 of the small end surface 20c. Further, the driven-side member 57 includes a rotator 61 freely rotated about an axis thereof, and a center 62 having a distal end thereof fitting into the center hole 23 of the large end surface 20b. Note that, the driven-side member 57 has the same structure as that of the driven-side member 32 illustrated in Fig. 5, and hence the driven-side member 32 can be substituted therefore.

Thus, by means of the center 60 of the drive-side member 56 and the center 62 of the driven-side member 57, the roller 20 is supported under a state of being arranged on the axis O thereof. Under the state, rotational driving of the rotator 58 on a drive-side-member-56 side causes the rotational force of the rotator 58 to be transmitted to the outer diameter surface 20a of the roller 20 through intermediation of the transmitter 59, and the roller 20 to be rotated about the axis O thereof.

That is, while the chucking device 55 rotates the roller 20 about the axis O thereof, the large end surface 20b and the large-end-surface-side corner portion 21 b of the corner portion 21 can be grinded by the grinding stone 50.

Note that, illustration of trimming on the small-end-surface-20c side is omitted. Similarly to the large end surface 20b, as long as the roller 20 is supported on the large-end-surface-20b side by the drive-side member 56, the small end surface 20c and the small-end-surface-side corner portion 22b of the round portion 22 can be grinded by a grinding stone including an end-surface grinding portion and a corner-portion grinding portion which are similar to those of the grinding stone 50.

Next, the outer-diameter-surface grinding step 72 is performed so that the outer diameter surface 20a of the roller is grinded as illustrated in Fig. 8. Also in this case, plunge cut is performed with a grinding stone 65 formed by dressing. As illustrated in Fig. 9, the grinding stone 65 includes a recess portion 66 formed so as to externally fit to the outer diameter surface 20a, the recess portion 66 having a bottom surface constituting an outer-diameter-surface grinding portion 67. Further, an outer-diameter-surface grinding portion side of a side surface 68 on a large-end-surface side of the recess portion 66 constitutes a corner grinding portion 68a for grinding the outer-diameter-surface-side corner portion 21 a. An outer-diameter-surface grinding portion side of a side surface 69 on a small-end-surface side of the recess portion 66 constitutes a corner grinding portion 69a for grinding the outer-diameter-surface-side corner portion 22a.

The chucking device 30 illustrated in Fig. 5 can be used as a chucking device in this case. Thus, by means of the center 35 of the drive-side member 31 and the center 37 of the driven-side member 32, the roller 20 is arranged on the axis O thereof. Rotational driving of the rotator 33 on the drive-side-member-31 side causes the rotational force of the rotator 33 to be transmitted to the small end surface 20c of the roller 20 through intermediation of the transmitter 34, and the roller 20 to be rotated about the axis thereof.

That is, while the chucking device 30 rotates the roller 20 about the axis thereof, the outer diameter surface 20a and the outer-diameter-surface-side corner portions 21 a and 22a of the roller 20 are grinded by the grinding stone 65. With this, grinding work (processing work) with respect to the roller 20 is completed. Note that, as illustrated in Fig. 2, when an inclination angle of the outer-diameter-surface-side corner portion 21 a is θ1, the inclination angle θ1 is set to 30 degrees, for example. When an inclination angle of the outer-diameter-surface-side corner portion 22a is θ3, the inclination angle θ3 is set to 20 degrees, for example.

By the way, the processing facility illustrated in Figs. 5 to 9 is driven, for example, by a command of computer numerical control (CNC). CNC means control on moving speeds or moving amounts of tools used in machining, the control being performed by a computer based on numerical values.

Although the processing steps illustrated from Figs. 5 to 9 are performed for processing a tapered roller, as illustrated in Figs. 1 to 3, a self-aligning spherical roller can be processed by processing steps the same as the above-mentioned processing steps. Further, as long as the center holes 23 and 24 are formed in both end surfaces, even a cylindrical roller can be processed under a state of being supported through intermediation of the center holes 23 and 24 with use of the processing device as described above so that the outer diameter surface 20a and the round portions 21 and 22 at the corners between the end surfaces 20b and 20c and the outer diameter surface 20a are smoothly continuous with each other.

The bearing roller according to the present invention is processed so that the outer diameter surface 20a and the round portions 21 and 22 between the end surfaces 20b and 20c and the outer diameter surface 20a are smoothly continuous with each other. Thus, when the roller 20 is incorporated in the bearing, edge load can be suppressed and rotational torque can be reduced.

Edge load can be suppressed as just described above, and hence load on an inner race and an outer race is reduced, with the result that a life of the bearing can be prolonged. Further, rotational torque can be reduced, and hence high-accuracy rotation can be achieved. In the processing of the roller 20, the roller 20 is processed while being supported through intermediation of the center holes 23 and 24 in all of the processing steps, and hence separately processed parts are concentric with each other. Thus, processing can be performed so that the outer diameter surface 20a and the corner portions 21 and 22 between the end surfaces 20b and 20c and the outer diameter surface 20a are smoothly continuous with each other. Further, the end surfaces 20b and 20c and the outer diameter surface 20a can be processed separately from each other. Thus, dimensional accuracy is enhanced, and rotational accuracy of the bearing using the roller processed as described above is also enhanced.

Through quenched-steel trimming, compressive stress generated at the time of quenched-steel trimming is left on the surface of the roller, and hence the life of the bearing can be further prolonged. Further, as illustrated in Fig. 9, at the time of grinding of the outer diameter surface 20a, the transmitter 34 is pressed against the end surface 20b. That is, the end surface 20b grinded as illustrated in Fig. 7 is used as a reference surface at the time of grinding of the outer diameter surface 20a. Thus, positional accuracy in an axial direction is enhanced, and dimensional accuracy of the roller to be processed is enhanced.

When being driven by a command of the computer numerical control (CNC), the processing facility has an advantage of stably processing to form a continuous processed surface.

Although description is made of the embodiment of the present invention hereinabove, the present invention is not limited to the above-mentioned embodiment, and various modifications may be made thereto. For example, the present invention may be applied to a case of a self-aligning spherical roller bearing or an asymmetrical roller bearing. Further, the curvature radii of the corner portions 21 and 22, specifically, the curvature radii of the outer-diameter-surface-side corner portions 21 a and 22a and the end-surface-side corner portions 21 a and 22b can be set to any value. Still further, when processing roughness is required, lapping processing may be performed. Herein, the lapping processing is a type of polishing that a workpiece and a tool are rubbed against each other with abrasive grains being interposed therebetween.

### Industrial Applicability

The present invention may be applied to a cylindrical roller, a tapered roller, or a self-aligning spherical roller. The self-aligning spherical roller is applicable to a symmetrical roller bearing.

### Reference Signs List

- 20a: outer diameter surface

- 20b: large end surface
- 20c: small end surface
- 21: round portion
- 22: round portion
- 23, 24: center hole
- 70: quenched-steel trimming step
- 71: end-surface grinding step
- 72: outer-diameter-surface grinding step

## Claims

1. A bearing roller (20), comprising center holes (23, 24) respectively formed in both end surfaces and round portions formed at both end surface sides,
**characterized in that**
a round portion (21) at one end surface side (20b) has an outer-diameter-surface-side corner portion (21 a) and a rounded portion (21 c) that is continuous with the outer-diameter-surface-side corner portion (21 a), and Rc > Ra is established where Ra represents a curvature radius of the outer-diameter-surface-side corner portion (21a) and Rc represents a curvature radius of the rounded portion (21 c), a round portion (22) at the other end surface side (20c) has an outer-diameter-surface-side corner portion (22a) and an end-surface-side corner portion (22b), and rb > ra is established where ra represents a curvature radius of the outer-diameter-surface-side corner portion (22a) and rb represents a curvature radius of the end-surface-side corner portion (22b), and wherein the outer diameter surface (20a) and round portions (21, 22) at corners between both the end surfaces (20b, 20c) and the outer diameter surface (20a) are smoothly continuous with each other.

2. A bearing, comprising the bearing roller according to claim 1.

3. A processing method for a bearing roller comprising center holes (23, 24) respectively formed in both end surfaces and round portions formed at both end surface sides, the method comprising:
an end-surface grinding step of grinding with an end-surface grinding stone (50) both end surfaces (20b, 20c) and end-surface-side corner portions at round portions (21, 22), under a state in which a bearing roller is rotated about an axis of the bearing roller while being supported through intermediation of center holes (23, 24) in both the end surfaces (20b, 20c) and held through intermediation of an outer diameter surface (20a) ; and
an outer-diameter-surface grinding step of grinding, with an outer-diameter-surface grinding stone (65) that is different from the end-surface grinding stone (50), the outer diameter surface (20a) and outer-diameter-surface-side corner portions at the round portions (21, 22), under a state in which the bearing roller is rotated about the axis of the bearing roller by a driving force transmitted from at least one of both the end surfaces while being supported through intermediation of the center holes (23, 24) in both the end surfaces.

4. A bearing roller according to claim 1, comprising a cylindrical roller.

5. A bearing roller according to claim 1, comprising a tapered roller.

6. A bearing roller according to claim 1, comprising a self-aligning spherical roller.

7. A processing method for a bearing roller according to claim 3,
wherein the end-surface grinding step and the outer-diameter-surface grinding step are performed after a surface of the bearing roller is crude-processed through quenched-steel trimming.

## Patentansprüche

1. Lagerrolle (20) mit Mittellöchern (23, 24), die jeweils in beiden Endflächen ausgebildet sind, und mit runden Bereichen, die an beiden Endflächenseiten ausgebildet sind,
**dadurch gekennzeichnet, dass**
ein runder Bereich (21) auf einer Endflächenseite (20b) einen Eckbereich (21a) auf der Seite einer Außendurchmesserfläche und einen abgerundeten Bereich (21 c), der in den Eckbereich (21 a) auf der Seite einer Außendurchmesserfläche übergeht, aufweist, und Rc > Ra festgelegt wird, wobei Ra für einen Krümmungsradius des Eckbereichs (21 a) auf der Seite einer Außendurchmesserfläche steht und Rc für einen Krümmungsradius des abgerundeten Bereichs (21 c) steht, wobei ein runder Bereich (22) auf der anderen Endflächenseite (20c) einen Eckbereich (22a) auf der Seite einer Außendurchmesserfläche und einen Eckbereich (22b) auf einer Endflächenseite aufweist und rb > ra festgelegt wird, wobei ra für einen Krümmungsradius des Eckbereichs (22a) auf der Seite einer Außendurchmesserfläche steht und rb für einen Krümmungsradius des Eckbereichs (22b) auf einer Endflächenseite steht, und wobei die Außendurchmesserfläche (20a) und runde Bereiche (21, 22) an Ecken zwischen beiden Endflächen (20b, 20c) und der Außendurchmesserfläche (20a) glatt ineinander übergehen.

2. Lager, das die Lagerrolle nach Anspruch 1 enthält.

3. Bearbeitungsverfahren für eine Lagerrolle mit Mittellöchern (23, 24), die jeweils in beiden Endflächen ausgebildet sind, und mit runden Bereichen, die an beiden Endflächenseiten ausgebildet sind, wobei das Verfahren aufweist:
einen Endflächen-Schleifschritt, bei dem mit einem Endflächen-Schleifstein (50) beide Endflächen (20b, 20c) und Eckbereiche auf einer Endflächenseite an runden Bereichen (21, 22) in einem Zustand geschliffen werden, in dem eine Lagerrolle um eine Achse der Lagerrolle gedreht wird, während sie mittels Mittellöchern (23, 24) in beiden Endflächen (20b, 20c) gestützt und mittels einer Außendurchmesserfläche (20a) gehalten wird; und
einen Außendurchmesserflächen-Schleifschritt, bei dem mit einem Außendurchmesserflächen-Schleifstein (65), der sich von dem Endflächen-Schleifstein (50) unterscheidet, die Außendurchmesserfläche (20a) und Eckbereiche auf der Seite einer Außendurchmesserfläche an den runden Bereichen (21, 22) in einem Zustand geschliffen werden, in dem die Lagerrolle durch eine von mindestens einer der beiden Endflächen übertragene Antriebskraft um die Achse der Lagerrolle gedreht wird, während sie mittels der Mittellöcher (23, 24) in den beiden Endflächen gestützt wird.

4. Lagerrolle nach Anspruch 1, die aus einer zylindrischen Rolle besteht.

5. Lagerrolle nach Anspruch 1, die aus einer Kegelrolle besteht.

6. Lagerrolle nach Anspruch 1, die aus einer Pendel-Tonnenrolle besteht.

7. Bearbeitungsverfahren für eine Lagerrolle nach Anspruch 3, bei dem der Endflächen-Schleifschritt und der Außendurchmesserflächen-Schleifschritt durchgeführt werden, nachdem eine Fläche der Lagerrolle durch Zurichten von abgeschrecktem Stahl grob bearbeitet wurde.

## Revendications

1. Galet de roulement (20) comprenant des trous centraux (23, 24) respectivement formés dans deux surfaces d'extrémité et des parties rondes formées au niveau de deux côtés de surface d'extrémité,
**caractérisé en ce que** :
une partie ronde (21) au niveau d'un côté de surface d'extrémité (20b) a une partie de coin du côté de la surface de diamètre externe (21 a) et une partie arrondie (21 c) qui est continue avec la partie de coin du côté de la surface de diamètre externe (21 a), et on établit Rc > Ra, où Ra représente un rayon de courbure de la partie de coin du côté de la surface de diamètre externe (21a) et Rc représente un rayon de courbure de la partie arrondie (21c), une partie ronde (22) au niveau de l'autre côté de surface d'extrémité (20c) a une partie de coin du côté de la surface de diamètre externe (22a) et une partie de coin du côté de la surface d'extrémité (22b), et on établit rb > ra, où ra représente un rayon de courbure de la partie de coin du côté de la surface de diamètre externe (22a) et rb représente un rayon de courbure de la partie de coin du côté de la surface d'extrémité (22b), et dans lequel la surface de diamètre externe (22a) et les parties rondes (21, 22), au niveau des coins entre les deux surfaces d'extrémité (20b, 20c) et la surface de diamètre externe (20a), sont régulièrement continues entre elles.

2. Roulement, comprenant le galet de roulement selon la revendication 1.

3. Procédé de traitement pour un galet de roulement comprenant des trous centraux (23, 24) respectivement formés dans deux surfaces d'extrémité et des parties rondes formées au niveau de deux côtés de surface d'extrémité, le procédé comprenant :
une étape de meulage de surface d'extrémité consistant à meuler avec une meule de surface d'extrémité (50), les deux surfaces d'extrémité (20b, 20c) et des parties de coin du côté de la surface d'extrémité au niveau des parties rondes (21, 22), dans un état dans lequel un galet de roulement tourne autour d'un axe du galet de roulement tout en étant supporté par l'intermédiaire des trous centraux (23, 24) dans les deux surfaces d'extrémité (20b, 20c) et maintenus par l'intermédiaire d'une surface de diamètre externe (20a) ; et
une étape de meulage de surface de diamètre externe consistant à meuler, avec une meule de surface de diamètre externe (65) qui est différente de la meule de surface d'extrémité (50), la surface de diamètre externe (20a) et les parties de coin du côté de la surface de diamètre externe au niveau des parties rondes (21, 22), dans un état dans lequel le galet de roulement tourne autour de l'axe du galet de roulement par une force d'entraînement transmise à partir d'au moins l'une des deux surfaces d'extrémité tout en étant supporté par l'intermédiaire des trous centraux (23, 24) dans les deux surfaces d'extrémité.

4. Galet de roulement selon la revendication 1, comprenant un galet cylindrique.

5. Galet de roulement selon la revendication 1, comprenant un galet conique.

6. Galet de roulement selon la revendication 1, comprenant un galet sphérique à alignement automatique.

7. Procédé de traitement pour un galet de roulement selon la revendication 3,
dans lequel l'étape de meulage de surface d'extrémité et l'étape de meulage de surface de diamètre externe sont réalisées après qu'une surface du galet de roulement a été traitée grossièrement en ébarbant l'acier trempé.
